# EUROPÄISCHE PATENTSCHRIFT

(11) **EP 0 743 008 B1**
(45) Veröffentlichungstag und Bekanntmachung des Hinweises auf die Patenterteilung: **08.03.2000**
(21) Anmeldenummer: 96107449.9
(22) Anmeldetag: 10.05.1996
(51) Int. Cl.: A22C 11/00

(54) **Vorrichtung zur Herstellung von Würsten**
Device for manufacturing sausages
Dispositif de fabrication de saucisses

(30) Priorität: 18.05.1995 DE 29508291 U
(43) Veröffentlichungstag der Anmeldung: 20.11.1996
(73) Patentinhaber: Albert Handtmann Maschinenfabrik GmbH & Co. KG, D-88396 Biberach (DE)
(72) Erfinder: Schliesser, Gerhard, 88489 Wain (DE); Burger, Karl, 88456 Ingoldingen-Muttensweiler (DE)
(74) Vertreter: Grünecker, Kinkeldey, Stockmair & Schwanhäusser Anwaltssozietät

(56) Entgegenhaltungen:
- EP-A- 0 498 483
- DE-B- 1 107 552
- US-A- 5 183 433

## Beschreibung

Die Erfindung betrifft eine Vorrichtung zum Erzeugen und Überführen von in zusammenhängenden Ketten gebildeten Naturdarmwürsten auf einen Rauchstock, mit einem Füllrohr, auf das zum Befüllen mit Wurstbrät ein Naturdarm aufgezogen wird.

Vorrichtungen zum Erzeugen und Überführen von in Ketten gebildeten Würsten sind im Stand der Technik in vielfältiger Weise bekannt (s. z.B. EP-A1-0482 368). Um die mit Wurstabfüllmaschinen prinzipiell möglichen hohen Leistungen auch bei der Weiterverarbeitung der Würste ausnützen zu können, wird versucht, die hinter dem Füllrohr entstehenden Wurstketten oder Wurststränge weitgehend automatisch auf Rauchstöcke in Schlaufen zu überführen, von wo sie dann einfach in Räucherkammern verbracht werden können.

Die Würste werden nach dem Stand der Technik unmittelbar hinter dem Füllrohr an ein Transportband übergeben. Beim Weitertransport mit dem Transportband werden die Würste vergleichmäßigt und fallen dann am Ende auf eine Transporteinrichtung. Diese Transporteinrichtung weist im variablen Abstand zueinander einstellbare Transporthaken auf, die in einer horizontalen Ebene umlaufen. Der Ausstoß der Wurstfüllmaschine und die Bewegung des Transportbandes sind mit der Transporteinrichtung derart koordiniert, daß die ankommenden, bereits abgedrehten Wurstketten schlaufenartig über die umlaufenden Haken fallen, die sie dann über einen Rauchstock transportieren.

Maschinen dieser Art sind in der Lage, mit Leistungen bis zu 30 Würsten pro Sekunde zu fahren.

Ähnliche Vorrichtungen dieser Art sind z.B. in der europäischen Patentanmeldung DE-A1-0189 763 oder auch CH-PS 598 766 beschrieben.

Allen diesen Maschinen, die weitgehend automatisch arbeiten, ist jedoch gemeinsam, daß sie zwar beim Einsatz von Kunstdärmen, die eine ausreichende Festigkeit aufweisen, zuverlässig arbeiten können, für den Einsatz zur Erzeugung von Naturdarmwürsten sind sie jedoch nicht geeignet. Bekanntermaßen ist die Verarbeitung von Naturdärmen aufgrund der wesentlich geringeren Reißfestigkeit, d.h. höheren Empfindlichkeit sowie ihrer naturgegebenen Schwankungen in Dicke, Länge und Form wesentlich komplizierter.

Beim Erzeugen von Naturdarmwürsten ist es daher bisher kaum gelungen, halb oder vollautomatisch arbeitende, die Wurststränge zum Rauchstock überführende Maschinen einzusetzen. Überwiegend wird heute bei der Erzeugung von Naturdarmwüsten noch so vorgegangen, daß man in der Regel 3 bis 20 m lange Naturdarmhüllen auf ein Füllrohr aufschiebt und dann durch intermittierende oder kontinuierliche Betätigung des Füllrohres Wurstketten erzeugt, die man direkt auf einen dem Füllrohr nachgeschalteten Tisch spritzt, so daß sich auf dem Tisch ungeordnet die Wurstketten sammeln. Von mehreren, um den Tisch herumstehenden Bedienungspersonen werden die Würste dann von Hand in gewünschten Schlaufengrößen auf Rauchstöcke gehängt. Nachteilig dabei ist nicht nur der große personelle Aufwand. Es bestehen auch hygienische Bedenken, da sich aufgrund der ständigen Ansammlung der Wurstketten auf dem Tisch dort Darmwasser der Naturdärme ansammelt.

Bei einem anderen bekannten Verfahren werden die Naturdarmwurstketten nicht auf einen der Abfüllmaschine beigestellten Tisch gespritzt, sondern in einen Wasserkessel. Das Ende einer Wurstkette wird dann von umstehenden Bedienungspersonen ergiffen und in ein Transportband eingelegt, das die Würste weitertransportiert und an Rauchstöcke übergibt.

Weiterhin beschreibt die DE-A-1107552 eine Vorrichtung zum Erzeugen und Überführen von in zusammenhängenden Ketten gebildeten Würsten auf einen Rauchstock mit einem Füllrohr, einer dem Füllrohr nachgeordneten Transporteinrichtung in Form eines umlaufenden Transportbandes mit Transporthaken für die Wurstschleifen und einer Übergaberutsche zum Überführen der hinter dem Füllrohr entstehenden Wurstketten in die Transportbahn der Transporthaken derart, dass diese schlaufenartig über die Transporthaken hängen. Allerdings hat auch diese Vorrichtung den Nachteil, dass es beim Verarbeiten von Naturdärmen, die z.B. zum Befüllen mit Wurstbrät auf das Füllrohr aufgezogen werden, zu Problemen kommen kann, da Naturdärme bekanntermaßen wesentlich geringere Reißfestigkeit haben.

Aufgabe der Erfindung ist es, eine Vorrichtung anzugeben, die sich zum automatischen oder halbautomatischen Überführen von Naturdarmwurstketten auf einen Rauchstock eignet, so daß bei gleicher Leistung weniger Bedienungspersonal erforderlich ist.

Gelöst wird diese Aufgabe durch eine Vorrichtung nach Anspruch 1. Vorteilhafte Ausführungsformen sind Gegenstand der Unteransprüche.

Bei dieser Lösung wird also ebenfalls eine Transporteinrichtung, wie sie vom Prinzip her aus der europäischen Anmeldung 482 368 bekannt ist, eingesetzt, die Würste werden jedoch unmittelbar hinter dem Füllrohr bzw. einem dort wirkenden Bremsring vermittels einer Rutsche in die Bahn der Transporthaken überführt, wobei für eine Bedienungsperson die Möglichkeit eröffnet wird, durch die Schaffung eines Zugriffsraumes auf die entstehenden Wurstketten unmittelbar hinter dem Füllrohr einzuwirken. Durch die Schaffung des freien Zugriffsraumes kann eine Bedienungsperson in diesem Bereich bereits für eine geordnete Zuführung über die Rutsche auf die Transporthaken sorgen, so daß nicht mehr auf dem Tisch oder in einem Wasserbehälter zwischengelagert werden muß, sondern direkt an die Transporteinrichtung übergeben werden kann, die die Schlaufen dann, z.B. wie in der genannten europäischen Offenlegungsschrift 482 368 beschrieben, an einen Rauchstock übergibt.

Weiterhin ist dabei vorgesehen, daß die Übergaberutsche an dem dem Füllrohr zugewandten Ende mit einer als Zugriffsraum dienenden Ausnehmung versehen ist. Diese Ausnehmung, die in der unteren Bahn der Rutsche geschaffen wird, erlaubt es, daß eine Bedienungsperson mit der Hand von unten an die entstehenden Wurststränge fassen und insbesondere dann, wenn die Breite der Ausnehmung in axialer Richtung der Rutsche zwischen 4 und 10 cm beträgt, mit mehreren Fingern einer Hand unterstützend von unten an die Wurststränge führend eingreifen kann, wobei von oben auf die Würste dann mit dem Daumen ebenfalls eingewirkt werden kann.

Wenn bei einer bevorzugten Ausführungsform die Übergaberutsche halbschalig ausgebildet ist, ist von oben her ohnehin eine freie Zugriffsmöglichkeit geschaffen und es wird ein Freiraum über den halben Umfang der Übergaberutsche gegeben, wo sich die Würste zwanglos ordnen können, ohne daß es durch eine zu starke Zwangsführung zu Darmplatzern kommt.

In einer weiteren Ausgestaltung der Erfindung ist die Übergabeschale an einem am freien Ende des Füllrohres positionierten, an sich bekannten Haltearm für ein Bremsringgetriebe angeordnet. Bei einer anderen Ausführungsform kann die Übergaberutsche auch an der Transporteinrichtung befestigt sein. Dies wird insbesondere dann der Fall sein, wenn man ohne Bremsringgetriebe arbeitet. Durch Zuführung der Transporteinrichtung zum Füllrohr wird dann die Rutsche entsprechend positioniert.

Die Erfindung wird nun im folgenden anhand des in der Zeichnung dargestellten Ausführungsbeispiels weiter erläutert und beschrieben.

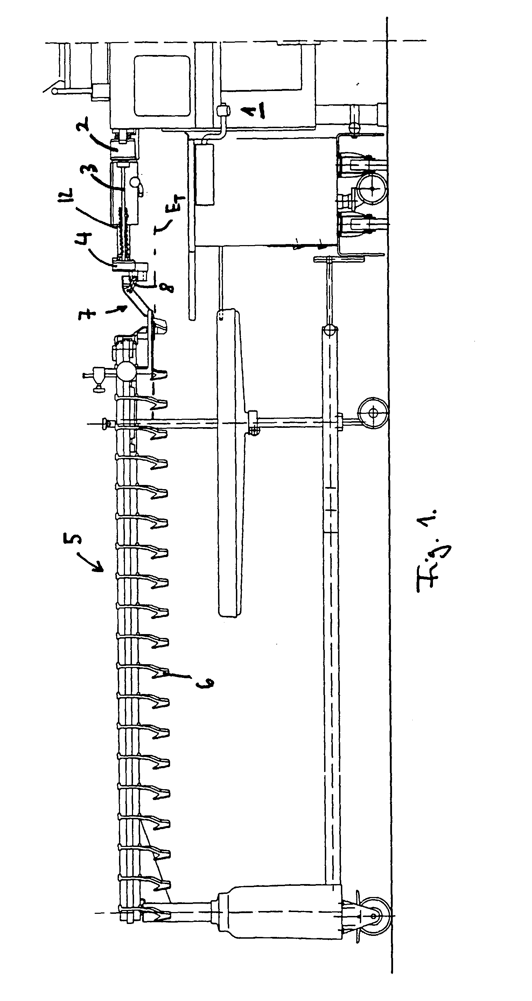

Der grundsätzliche Aufbau der erfindungsgemäßen Vorrichtung ist in Figur 1 dargestellt. Man erkennt eine insgesamt mit 1 bezeichnete Füll- und Portioniermaschine, die in der Lage ist, portionsweise oder kontinuierlich durch ein Füllrohr 3 Brät auszustoßen. Über das Füllrohr 3 wird eine Darmraupe 12 aufgezogen, in die das Brät hineingestoßen wird und die sich dabei von selbst vom Füllrohr 3 abzieht. Zum Erzeugen von Wurstketten mit Abdrehungen kann über das Abdrehgetriebe 2 der über das vordere Ende des Füllrohres 3 gestülpte Bremsring 4 Einschnürungen erzeugen, so daß sich Wurststränge mit Unterteilungen in bestimmten Portionsgrößen ergeben. Unmittelbar anschließend an das Füllrohr 3 ist eine Übergaberutsche 7 angeordnet, die mit Hilfe einer Halterung 8 am Gehäuse des Bremsrings 4 befestigt ist. Dieser Übergaberutsche nachgeschaltet ist eine an sich bekannte Transporteinrichtung 5, die in einer Horizontalebene E_{T} umlaufend und beabstandet zueinander angeordnete Transporthaken aufweist. Zur detaillierteren Konstruktion und Wirkungsweise dieser Transporteinrichtung wird auf die EP 482 368 verwiesen.

Wie Figur 1 zeigt, befindet sich das Füllrohr 3 in einer über der Transporthakenbahnebene E_{T} gelegenen Höhe. Die Übergaberutsche ist nach unten geneigt ausgebildet und führt die entstehenden Wurstketten in die Bahn der endlos umlaufenden Transporthaken unter Bildung von Wurstschleifen.

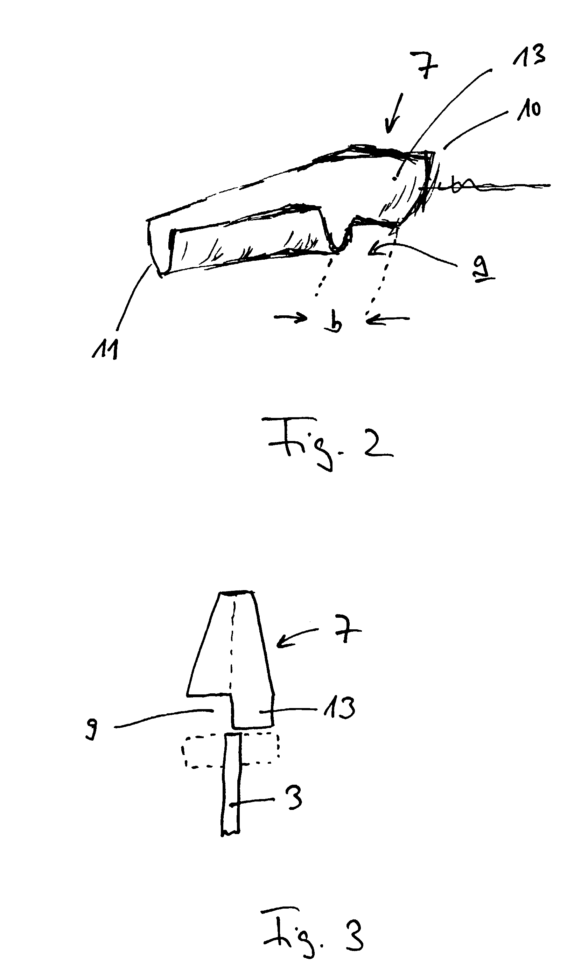

Der genauere Aufbau der Übergaberutsche ist den Figuren 2 und 3 zu entnehmen. Die in diesem Ausführungsbeispiel dargestellte Übergaberutsche besteht aus einer Halbschale, vorzugsweise aus Kunststoff gebildet, die an ihrem füllrohrseitigen Ende 10 mit einem als Ausnehmung 9 ausgebildeten Zugriffsraum versehen ist. Die Breite b der Ausnehmung 9 beträgt vorzugsweise zwischen 4 und 10 cm, so daß hier in diesem Bereich zwei bis vier Finger mit dem Handrücken nach unten in die Bahn der ausgestoßenen Würste führend eingreifenden Hand einer Bedienungsperson zu liegen kommen können. Die Wurstschleifen verlassen die Rutsche an dem den Transporthaken zugewandten Ende 11.

In der Draufsicht der Figur 3 ist die Ausnehmung 9 noch deutlicher zu erkennen. Die in Umfangsrichtung sich an die Ausnehmung 9 anschließende Wandung 13 sorgt für eine gewisse, der Hand einer Bedienungsperson dann gegenüberliegende Führung, jedoch ist aufgrund der halbschaligen Ausbildung und der nach oben offenen Konstruktion der Übergaberutsche ein großer Freiraum für die austretenden Würste gegeben, so daß die Entstehung von Darmplatzern bei Naturdärmen weitestgehend vermieden werden kann. Da auch im Bereich des Zugriffsraumes ein Zugriff von oben möglich ist, kann der Daumen in der Hand noch eine obere Führung bilden, so daß insgesamt ergonomisch und wirksam eine Bedienungsperson unterstützend und lenkend eingreifen kann und die an sich automatische Überführung der Wurstketten auf die Transporthaken 6 unterstützen kann.

Wird eine Übergaberutsche verwendet, die ohne Ausnehmung 9 ausgebildet ist, so kann der notwendige Zugriffsraum dadurch gebildet werden, daß die Rutsche so angeordnet wird, daß zwischen dem Füllrohrende und dem füllrohrseitigen Ende 10 der Rutsche insgesamt ein der Breite b etwa entsprechender Abstand eingehalten wird. Nach dem dargestellten Ausführungsbeispiel ist die Übergaberutsche 7, wie erwähnt, am Gehäuse des Bremsrings 4 angeordnet, sie kann jedoch ebenso an der Transporteinrichtung 5 angeordnet und beim Heranschieben der Transporteinrichtung an die Portioniermaschine am Füllrohr positioniert werden.

Der erfindungsgemäße Einsatz einer Übergaberutsche mit freiem Zugriffsraum für eine Bedienungsperson ermöglicht es, eine ansonsten bekannte, jedoch bisher nur zum automatischen Überführen von Kunstdarmwürsten verwendbaren Vorrichtung nun auch für Naturdarmwurststränge einzusetzen, wobei allein eine Bedienungsperson unmittelbar hinter dem Füllrohr in einfacher Weise eine Kontroll- und Überwachungsfunktion ausführen kann. Es ist allerdings auch denkbar, im Bereich dieses Zugriffsraumes mit einer flexiblen, evtl. Sensorgesteuerten Führungshilfe anstelle einer Bedienungsperson zu arbeiten.

Wenn die dann gebildeten Naturdarmwurstschleifen auf Haken 6 hängen, kann beispielsweise durch Verwendung von Haken, wie sie in der mehrfach erwähnten europäischen Patentschrift 482 368 beschrieben sind, eine automatische Überführung auf einen Rauchstock stattfinden. Der Rauchstock kann allerdings auch manuell von einer Bedienungsperson in die schleifenartig auf den Haken 6 hängenden Wurstketten eingefädelt werden und die Wurstschlaufen dann nach oben auf dem Rauchstock hängend entnommen werden.

## Patentansprüche

1. Vorrichtung zum Erzeugen und Überführen von in zusammenhängenden Ketten gebildeten Naturdarmwürsten auf einen Rauchstock, mit
- einem Füllrohr, auf das zum Befüllen mit Wurstbrät ein Naturdarm aufgezogen wird,
- einer dem Füllrohr (2) nachgeordneten Transporteinrichtung (5) in Form eines umlaufenden Transportbandes mit Transporthaken (6) für die Wurstschleifen und
- einer Übergaberutsche (7), zum Zuführen der hinter dem Füllrohr entstehenden Wurstketten in die Transportbahn der Transporthaken (6) derart, dass diese schlaufenartig über die Transporthaken hängen, wobei die Übergaberutsche (7) derart an das Füllrohr (3) anschließend ausgebildet und angeordnet ist, dass ein um die sich bildende Wurstkette herum zumindest etwa über den halben Umfang freier Zugriffsraum (9) für die Hand einer Bedienungsperson unmittelbar hinter dem Füllrohr gebildet ist, wobei die Übergaberutsche (7) an dem dem Füllrohr zugewandten Ende (10) mit einer als Zugriffsraum dienenden Ausnehmung (9) versehen ist.

2. Vorrichtung nach Anspruch 1,
**dadurch gekennzeichnet**, dass
die Übergaberutsche (7) halbschalenartig ausgebildet ist.

3. Vorrichtung nach Anspruch 1 oder 2,
**dadurch gekennzeichnet**, dass
die Ausnehmung (9) in axialer Richtung der Übergaberutsche (7) gesehen eine Breite von 4 bis 10 cm aufweist.

4. Vorrichtung nach wenigstens einem der vorangegangenen Ansprüche,
**dadurch gekennzeichnet,** dass
die Übergaberutsche (7) an einem am freien Ende des Füllrohres (3) positionierten Haltearm für ein Bremsringgetriebe (4) mittels einer halterung (8) angeordnet ist.

5. Vorrichtung nach einem der Ansprüche 1 bis 3,
**dadurch gekennzeichnet**, dass
die Übergaberutsche (7) an der Transporteinrichtung (5) befestigt ist.

## Claims

1. A device for making and transferring natural skin sausages formed in coherent chains to a smoke stick, comprising
- a filling tube over which a natural casing or skin is pulled to be filled with sausage meat,
- a transportation device (5) arranged downstream of said filling tube (5) in the form of a rotating transportation belt including transportation hooks (6) for sausage loops, and
- a transfer chute (7) for supplying the sausage chains formed behind said filling tube into the transportation path of said transportation hooks (6) in such a manner that said chains hang in the manner of loops over said transportation hooks, said transfer chute (7) being formed and arranged directly downstream of said filling tube (3) in such a manner that an access space (9) which is free around the forming sausage chain at least over about half the circumference is formed for an operator's hand directly behind said filling tube, said transfer chute (7) being provided with a recess (9) serving as an access space at the end (10) facing said filling tube.

2. A device according to claim 1,
**characterized in** that
said transfer chute (7) is in the form of a shell.

3. A device according to claim 1 or 2,
**characterized in** that
said recess (9) has a width of 4 to 10 cm when viewed in the axial direction of said transfer chute (7).

4. A device according to at least one of the preceding claims,
**characterized in** that
said transfer chute (7) is arranged by means of a fixing device (8) on a holding arm positioned at the free end of said filling tube (3) for a brake ring gear (4).

5. A device according to any of claims 1 to 3,
**characterized in** that
said transfer chute (7) is secured to said transportation means (5).

## Revendications

1. Dispositif de production de saucisses sous boyau naturel se présentant en chapelets connectés et de convoyage de celles-ci vers une broche pour fumage, comprenant
- un tube de remplissage sur lequel est enfilé un boyau naturel pour le remplissage avec de la chair à saucisse,
- un dispositif de transport (5) faisant suite au tube de remplissage (2), sous forme d'un convoyeur tournant avec crochets de transport (6) pour les boucles de saucisses et
- une goulotte (7) pour amener sur le circuit de transport des crochets de transport (6) les saucisses en chapelets apparaissant derrière le tube de remplissage, de façon que celles-ci pendent en boucles sur les crochets de transport, la goulotte (7) étant conçue et placée à la suite du tube de remplissage (3) de façon que soit formé au moins sur le demi-périmètre environ, autour du chapelet de saucisses en train de se former, directement derrière le tube de remplissage, un espace d'accès libre (9) pour la main d'un opérateur, la goulotte (7) étant pourvue, à son extrémité (10) située du côté du tube de remplissage, d'un creux (9) tenant lieu d'espace d'accès.

2. Dispositif selon la revendication 1,
caractérisé en ce que
la goulotte (7) a la forme d'une demi-coque.

3. Dispositif selon la revendication 1 ou 2,
caractérisé en ce que
le creux (9) vu dans la direction axiale de la goulotte (7) présente une largeur de 4 à 10 cm.

4. Dispositif selon l'une au moins des revendications précédentes,
caractérisé en ce que
la goulotte (7) est placée au moyen d'une fixation (8) sur un bras de support pour un mécanisme à anneau de freinage (4), positionné à l'extrémité libre du tube de remplissage (3).

5. Dispositif selon l'une des revendications de 1 à 3,
caractérisé en ce que
la goulotte (7) est fixée au dispositif de transport (5).
